# EUROPEAN PATENT APPLICATION

(11) **EP 1 442 734 A1**
(43) Date of publication of application: **04.08.2004**
(21) Application number: 04002219.6
(22) Date of filing: 02.02.2004
(51) Int. Cl.: A61H 1/00

(54) **Massage machine**

(30) Priority: 03.02.2003 JP 2003026397
(71) Applicant: Sanyo Electric Co., Ltd., Moriguchi-shi, Osaka (JP)
(72) Inventor: Watanabe, Tsuyoshi, Asago-gun, Hyogo (JP); Nakamura, Takashi, Kasai-Shi, Hyogo (JP); Suzuki, Takamasa, Kasai-shi, Hyogo (JP); Koma, Toshiki, Himeji-shi, Hyogo (JP)
(74) Representative: TER MEER STEINMEISTER & PARTNER GbR

(57) **Abstract**

A massage machine has an operating control device which is easy to manipulate for the user to be massaged in a comfortable state. The massage machine (1) has a massage device (11) incorporated in a chair (8) for massaging the person to be treated, and comprises a main operating unit (18) to be operated by the person for controlling a plurality of movements of the massage device (11) and other elements, and an auxiliary operating unit (19) for operating a specified movement included among the movements, the auxiliary operating unit (19) being movable relative to the chair (8). The auxiliary operating unit (19) is free to move, can be easily held by the hand and is therefore unlikely to cause fatigue to the hand even when held for a prolonged period of time, permitting the person to be massaged in a relaxed state.

## Description

### FIELD OF THE INVENTION

The present invention relates to massage machines comprising a massage device.

### BACKGROUND OF THE INVENTION

Massage machines include those comprising a massage device mounted on the backrest of a chair and movable upward and downward for massaging the person to be treated by tapping, kneading or exerting finger pressure or acupressure on the body portion extending from the neck to the shoulders or to the waist. Massage machines are operated using an operating control device electrically connected to the machine. The operating control device is manipulated for adjusting the angle of inclination of the backrest, selecting various massage movements, performing various control procedures, and recognizing the movement with reference to a display provided on the control device (see, for example, the publication of JP-A No. 2002-233560, page 3, para. 0012 and para. 0013, and FIG. 4).

The operating control device is adapted to direct all operations of the massage machine including operations or movements which are not used frequently. The display provided on the device for showing particular modes of massage movements make the operating control device large-sized and heavier. The operating control device therefore has the problem of being difficult to use and causing fatigue to the hand manipulating the device.

### SUMMARY OF THE INVENTION

An object of the present invention is to provide a massage machine which comprises an operating control device easily usable and which gives a massage to the user in a relaxed state.

To fulfill the above object, the present invention provides a massage machine having a massage device incorporated in a chair for massaging the person to be treated, said massage machine comprises a main operating unit and an auxiliary operating unit, each to be manipulated by the person, the main operating unit and the auxiliary operating unit being adapted for directing at least one of movements of the massage device and other elements, the auxiliary operating unit being movable relative to the chair.

The auxiliary operating unit is adapted to direct, for example, a specified movement which is performed frequently among all the movements to be directed by the main operating unit. Therefore the auxiliary operating unit can be compacted, lightweight and held by hand easily since the auxiliary operating unit is free to move relative to the chair. Accordingly, the unit is unlikely to cause fatigue to the hand even if held for a prolonged period of time, enabling the user to be massaged in a relaxed state.

The auxiliary operating unit is adapted to direct, for example, an auxiliary movement which is performed frequently among all the movements to be directed by the main operating unit. Therefore the auxiliary operating unit can be compacted, lightweight and held by hand easily since the auxiliary operating unit is free to move relative to the chair. Accordingly, the unit is unlikely to cause fatigue to the hand even if held for a prolonged period of time, enabling the user to be massaged in a relaxed state.

With the massage machines described above, the specified or auxiliary movement is a movement which is performed frequently during massaging, so that most operations can be directed by the auxiliary operating unit without using the main operating unit. This makes the massage machine more convenient to use.

The massage machine further comprises a reclining mechanism for inclining or raising a backrest of the chair, and the angle of inclination of the backrest is made controllable as directed by the auxiliary operating unit. The adjustment of the inclination of the backrest, that is made frequently, can therefore be easily directed by the auxiliary operating unit.

The backrest of the chair is provided with the massage device upwardly or downwardly movably, and the massage device is movable upward or downward as directed by the auxiliary operating unit. While the massage device is moved upward or downward frequently during massaging, the massage machine is then so movable easily as directed by the auxiliary operating unit.

The chair is pivotally movably provided with a footrest at a forward end of a seat thereof, and the angle of pivotal movement of the footrest is controllable as directed by the auxiliary operating unit. While the angle of pivotal movement of the footrest is adjusted frequently during massaging, this adjustment is then easily made as directed by the auxiliary operating unit.

The specified or auxiliary movement is a massage movement of a particular intensity. The intensity of the massage movement of the massage device, which is adjusted frequently during massaging, can therefore be adjusted easily by the auxiliary operating unit.

The auxiliary operating unit is in the form of a hollow cylinder having a cut plane portion, so that the unit can be held with good stability with the thumb placed on the cut plane portion.

The cut plane portion has control means for directing the specified or auxiliary movement. This enables the user to hold the unit with good stability with the thumb placed on the plane portion and also to manipulate the control means by moving the thumb.

The cut plane portion has a rest for placing the thumb thereon. The auxiliary operating unit can then be gripped reliably at the specified portion.

The auxiliary operating unit is provided with means for detecting physiological data produced by massaging the person to be treated, whereby the physiological data can be detected while the auxiliary operating unit is being held by hand, and an optimum massage can be given to the user based on the data.

### BRIEF DESCRIPTION OF THE DRAWINGS

FIG. 1 is a perspective view showing a massage machine according to an embodiment of the invention, with a cover removed from a backrest;
FIG. 2 is a perspective view of a main operating unit of the massage machine;
FIG. 3 is a perspective view showing the main operating unit of the massage machine with a lid of the unit opened;
FIG. 4 is an enlarged fragmentary front view in section of the main operating unit of the massage machine to show a pivot and the surrounding thereof;
FIG. 5 is an enlarged fragmentary side elevation partly broken away and showing the pivot of the main operating unit of the massage machine and the surrounding thereof;
FIG. 6 is a front view of a flat cable for use in the main operating unit of the massage machine;
FIG. 7 is a front view of a flat cable to be compared with the flat cable for use in the main operating unit of the massage machine;
FIG. 8 is an enlarged fragmentary view of a liquid crystal display of the main operating unit of the massage machine;
FIG. 9 is a plan view of an auxiliary operating unit of the massage machine;
FIG. 10 is a side elevation of the auxiliary operating unit of the massage machine;
FIG. 11 is a perspective view of the massage machine auxiliary operating unit as held by hand; and
FIG. 12 is a control circuit diagram of the massage machine.

### DESCRIPTION OF THE PREFERRED EMBODIMENT

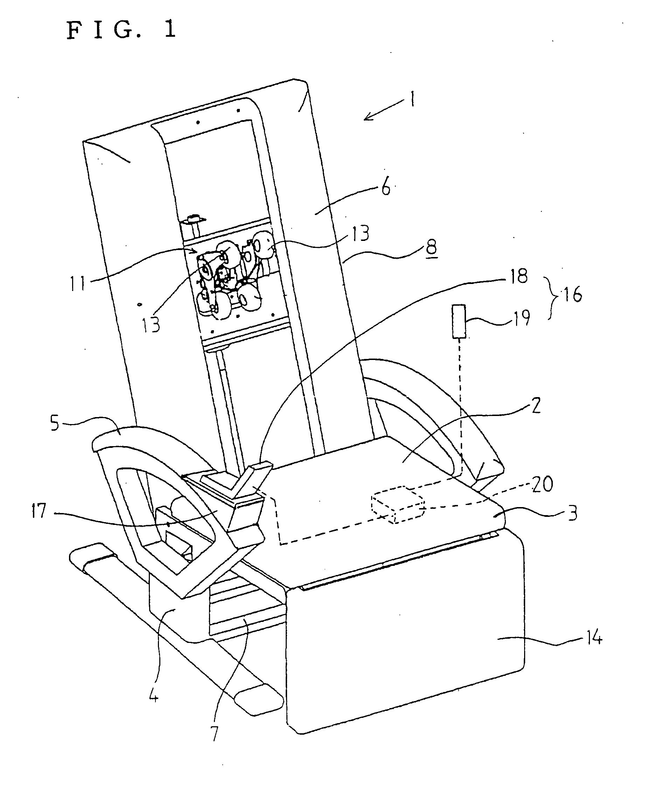

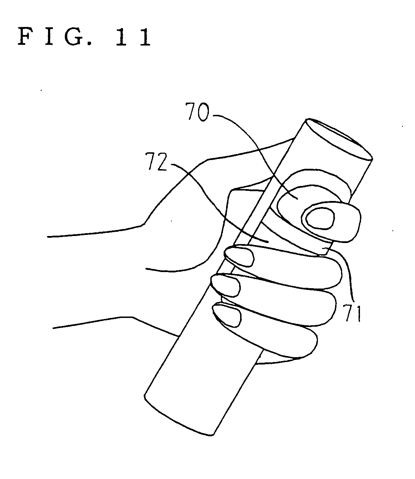

An embodiment of the present invention will be described with reference to a massage machine shown in FIGS. 1 to 12. The tiptoe side of the person to be treated and sitting in a seat 3 will be referred to as the "front," and his or her back side as the "rear."

With reference to FIG. 1, a massage machine 1 comprises a massage device 11 which can be incorporated in a chair 8.

The chair 8 comprises the seat 3 covered with a cushion 2, legs 4 provided at opposite sides of the seat 3, armrests 5 positioned above the respective legs 4, a backrest 6 provided on the rear side of the seat 3, and a frame assembly 7 serving as a framework for these components.

The backrest 6 has its lower portion pivoted to the rear end of the seat 3 and is inclined or raised to an angle desired by the user by a reclining mechanism (not shown) having an inclining motor 9 serving as a drive source.

The massage device 11 is incorporated in the backrest 6 and is movable upward and downward by a lift motor 10. The massage device 11 comprises a pair of left and right therapeutic members 13, 13 projecting forward from the backrest 6 and movable by a therapeutic motor 12 serving as a drive source. By combinations of some of the upward and downward movement of the massage device 11 and the forward, rearward, leftward and rightward movements of the therapeutic members 13, the person to be treated and sitting in the machine 1 can be given a kneading massage, tapping massage, acupressure massage, tapping-kneading massage or the like over his or her body portion from the neck to the waist. The backrest 6 is covered with a cushion (not shown).

Pivoted to the front end of the seat 3 is the upper end of a footrest 14 for placing the calves of the user thereon. The angle of the footrest 14 is adjustable by a turning motor 15.

An operating control device 16 is used for directing various operations or movements of the massage machine 1. The operating control device 16 comprises a main operating unit 18 to be placed on a support portion 17 provided on one of the armrests 5, and an auxiliary operating unit 19 to be held by the user with one hand and freely movable relative to the chair 8. These operating units 18, 19 are electrically connected to a control circuit 20 provided below the seat 3 by respective wiring lines 21 and 22.

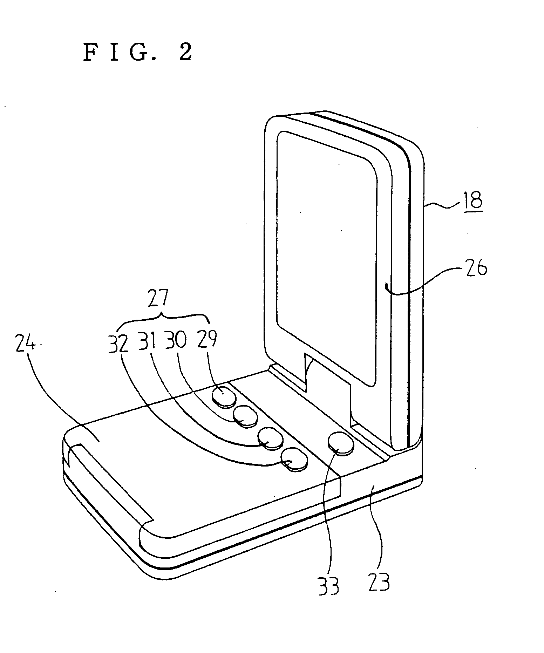

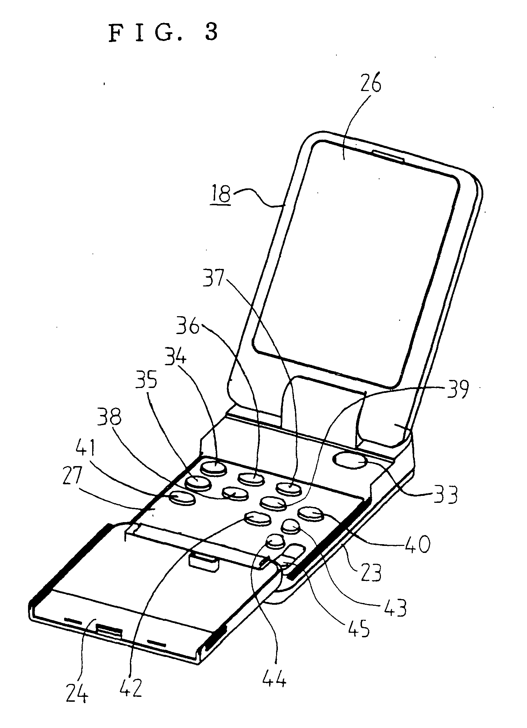

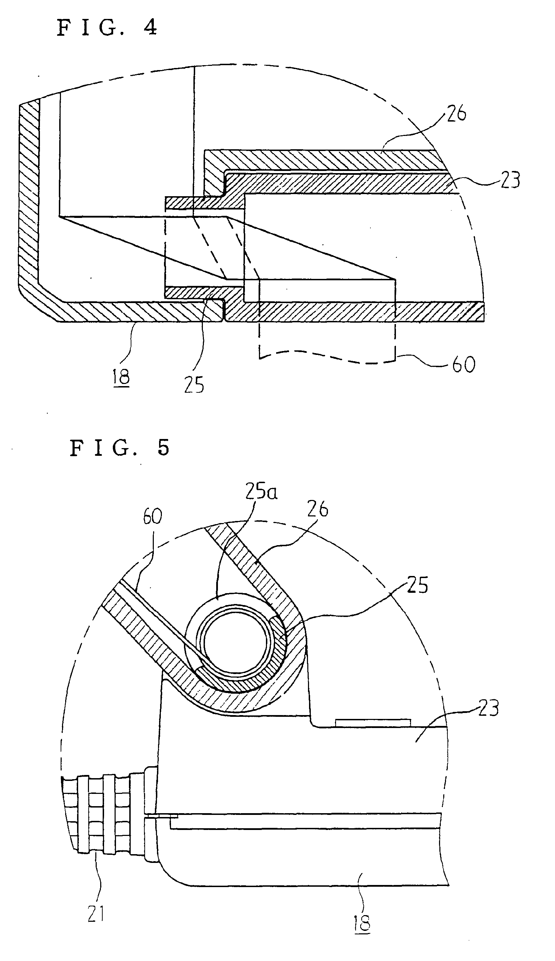

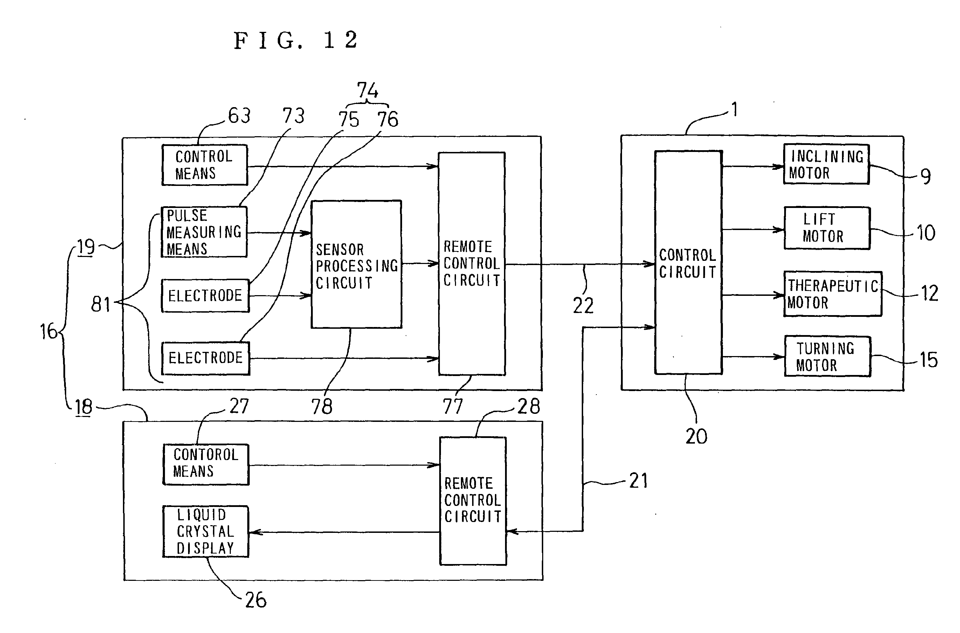

With reference to FIGS. 2 and 3, the main operating unit 18 comprises a base portion 23, a lid 24 attached to one end of the base portion 23 and foldable to cover the base portion 23, a liquid crystal display 26 supported by a pivot 25 (see FIGS. 4 and 5) provided at the other end of the base portion 23, control means 27 provided on the base portion 23 and the lid 24, and a remote control circuit 28 provided on the base portion 23. As shown in FIG. 12, the control means 27 feeds an output to the remote control circuit 28. The remote control circuit 28 is connected to the control circuit 20 of the chair 8 by the wiring line 21.

The control means 27 includes a stiffness relieving switch 29, fatigue relieving switch 30, relaxation switch 31 and slimming switch 32 which are provided on the lid 14. The stiffness relieving switch 29 is used for selecting a stiffness relieving course wherein an acupressure movement is mainly performed, the fatigue relieving switch 30 for selecting a fatigue relieving course wherein a tapping movement is mainly performed, the relaxation switch 31 for selecting a relaxation course wherein a kneading movement is mainly conducted, and the slimming switch 32 for selecting a slimming-down course wherein acupressure is applied mainly to points in the body which are said to be effective for slimming down.

The base portion 23 is provided with a power source switch 33 which is left exposed at all times regardless of the opening or closing of the lid 24. When the power source is turned on by pushing the power source switch 33, the four switches 29, 30, 31, 32 on the lid 24 can be manipulated in the case where the lid 24 is closed. When the lid 24 is opened as shown in FIG. 3, only an automatic switch 34 for directing an automatic course and a manual switch 35 for directing a manual course can be manipulated.

The part of the base portion 23 which is covered with the lid 24 as closed is provided with a neck/shoulder switch 36 and a waist switch 37 which are arranged in a row along with the automatic switch 34 and which can be manipulated when the automatic switch 34 is pushed. Also arranged in the above-mentioned part are an acupressure switch 38, tapping switch 39, kneading switch 40, tapping-kneading switch 41, intensity adjusting switch 42, speed adjusting switch 43, width adjusting switch 44 and shoulder position adjusting switch 45 which become ready for manipulation when the manual switch 35 is pushed.

The neck/shoulder switch 36 is used for directing a neck/shoulder course wherein massage movements, such as a kneading movement, tapping movement and acupressure movement, are performed in a predetermined sequence mainly over the area of the neck through the shoulder. The waist switch 37 serves to direct a waist course wherein massage movements, such as a kneading movement, tapping movement and acupressure movement, are performed in a predetermined sequence mainly over the waist area.

The acupressure switch 38, tapping switch 39, kneading switch 40 and tapping-kneading switch 41 serve to direct massage movements by the therapeutic members 13, 13, namely, an acupressure movement, tapping movement, kneading movement and tapping-kneading movement including tapping and kneading in combination, respectively. The intensity adjusting switch 42 and the speed adjusting switch 43 direct the intensity of each massage movement (the amount of forward pushing-out of the therapeutic members 13) and the speed of each massage movement, respectively. The width adjusting switch 44 gives direction about the distance between the therapeutic members 13, 13. When the shoulder position adjusting switch 45 is pushed on its upper side, the switch directs an upward movement of the massage device 11, and when pushed on its lower side, the switch 45 directs a downward movement of the massage device 11. The shoulder position providing a reference position for the automatic course is adjustable also by the switch 45.

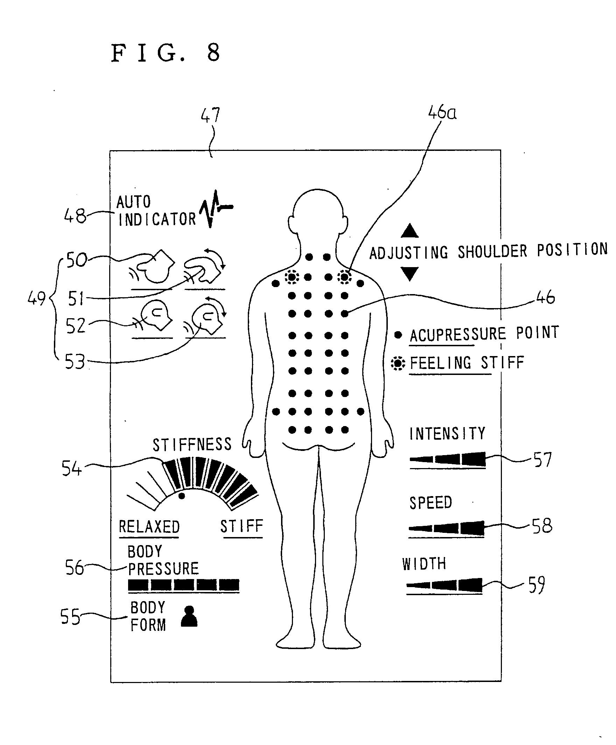

With reference to FIG. 8, an image of human body is shown on the liquid crystal display 26 centrally thereof. A plurality of therapeutic sites are represented as spots as indicated at 46. During massaging, the particular therapeutic site 46 to be massaged is lighted up by the control circuit 20 by way of the remote control circuit 28 to visually indicate the site of therapy. Furthermore, double-circles are represented as at 46a as shown in FIG. 8 at locations where the degree of stiffness is found to be greater than a predetermined value with reference to the output of the physiological data measuring means 81 to be described later. The representation 46a makes the user to recognize the site of great degree of stiffness, which can be relieved concentrically by manipulating switches.

The liquid crystal display 26 has at its left upper portion a grip indicator 47 which is lighted up during measurement with the electrodermal resistance measuring means 74 to be described later. Disposed below this grip indicator 47 is an auto indicator 48 which is lighted up when an automatic course, i.e., the neck/shoulder course, waist course, stiffness relieving course, fatigue relieving course, relaxation course or slimming course, is selected. Arranged below the auto indicator 48 are indicators 49 for various massage movements, i.e., an acupressure indicator 50 which is lighted up for an acupressure movement, a kneading indicator 51 to be lighted up for a kneading movement, a tapping indictor 52 to be lighted up for a tapping movement, and a tapping-kneading indicator 53 to be lighted up for a tapping-kneading movement.

Arranged at the left lower portion of the liquid crystal display 26 are a stiffness degree indicator 54 showing on the right side the decree of stiffness stepwise in seven levels relative to a reference position indicated by a black dot, and showing the degree of relaxation stepwise in three levels on the left side, a body form indicator 55 to be lighted up when the body form is detected as will be described later, and a pressure indicator 56 for indicating in four levels the pressure to be applied to the body at this time.

Provided at the right lower portion of the liquid crystal display 26 are an intensity indicator 57 and a speed indicator 58 for indicating the intensity and speed of each massage movement, respectively, in three levels, and a width indicator 59 for indicating the distance between the therapeutic members 13, 13.

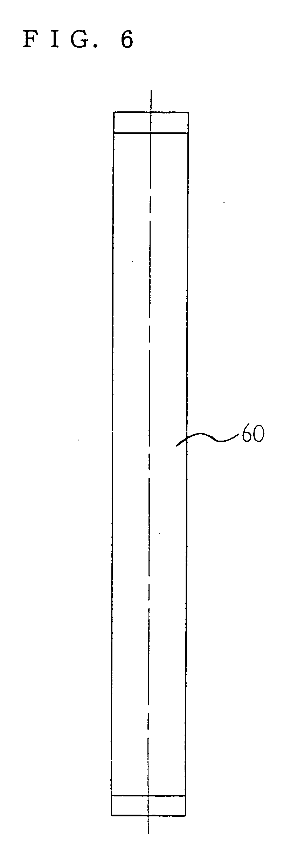

With reference to FIG. 6, the liquid crystal display 26 is connected to the remote control circuit 28 provided in the base portion 23 by a flat cable 60 in the form of a straight flat plate. Stated more specifically, the flat cable 60 extends from the base portion 23 into the display 26 as helically wound within the pivot 25 as shown in FIGS. 4 and 5. The pivot 25 extends into the display 26 and has a length not permitting the forward end thereof to interfere with the flat cable 60, such that the pivot end will not wear away or otherwise damage and break the cable 60. Further the portion of the pivot 25 projecting into the display 26 is cut out greatly to a U shape at its upper part 25a so as to make the angle of the display 26 adjustable relative to the base portion 23 over a predetermined range and to make the display pivotally movable while permitting the flat cable to bend without being subjected to an objectionable force.

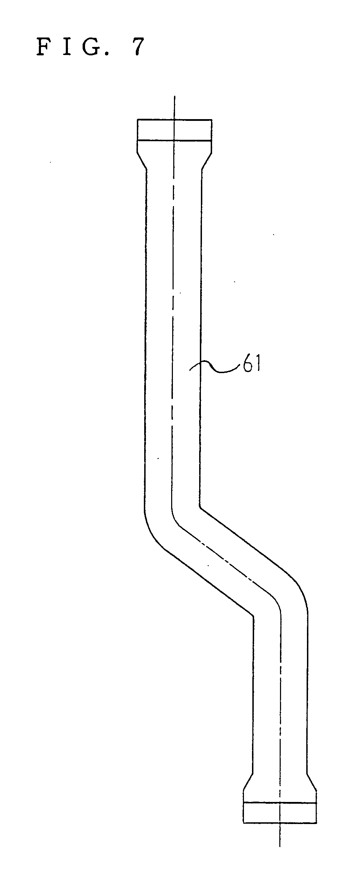

Thus, the cable 60 is rendered free of the likelihood of breaking, obviating the need to use an expensive flat cable 61 which is made in a bent form at the portion thereof to be inserted into the pivot 25 as shown in FIG. 7 to result in a cost reduction.

The liquid crystal display 26 is pivotally movable relative to the base portion 23 and therefore has the following advantage. If the backrest 6 is raised or inclined to an angle desired by the user or the eyes are positioned at a different level because a user of different height is seated in the chair when the machine is used with the main operating unit 18 placed on the support portion 17 as seen in FIG. 1, the liquid crystal display 26 can be pivotally movable to an angle at which the display is easy to view. Accordingly, the display 26 is convenient to use because the user need not raise his or her body to watch the display 26.

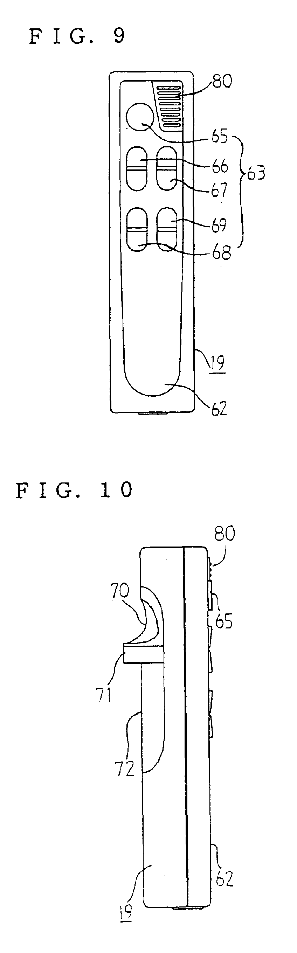

The auxiliary operating unit 19 is in the form of a hollow cylinder having a cut plane portion 62. As shown in FIGS. 9 to 11, the cut plane portion 62 has at its upper end a rest 80 for placing the thumb thereon. The rest 80 is a projection projecting from the plane portion 62 and having the same height as the following switches of control means 63 provided on the plane portion 62. The switches are provided in the vicinity of the thumb rest 80 and are easy to manipulate by moving the thumb.

Indicated at 65 is a repeat switch disposed on the plane portion 62 at one side the support portion 80. When pushed during each automatic course, the repeat switch 65 directs the repetition of the massage movement preceding that of the current automatic course.

Indicated at 66 is a turn switch disposed below the repeat switch 65. When pushed at its upper side, the turn switch 66 directs the footrest 14 to pivotally move upward, and when pushed at its lower side, the switch directs downward turn of the footrest 14.

Indicated at 67 is an inclining switch disposed beside the turn switch 66. When pushed at its upper side, the inclining switch 67 directs raising of the backrest 6, while when pushed at its lower side, the switch directs the backrest 6 to incline backward.

Indicated at 68 is a shoulder position adjusting switch provided below the turn switch 66. Like the one provided on the main operating unit 18, this switch 68 moves the massage device 11 upward when pushed at its upper side and moves the device 11 downward when pushed at its lower side. This switch 68 is also adapted to direct the adjustment of the shoulder position serving as a reference position for the automatic courses.

Indicated at 69 is an intensity adjusting switch disposed beside the shoulder position adjusting switch 68. When pushed at its upper side, the switch increases the intensity of each massage movement by pushing out the therapeutic members 13 forward, or when pushed at its lower side, the switch reduces the intensity of each massage movement by retracting the therapeutic members 13 rearward.

The switches of the control means 63 on the auxiliary operating unit 19 serve to direct movements which are frequently directed during massaging. Among these switches, the repeat switch 65, turn switch 66 and inclining switch 67 direct the movements which can not be directed by the main operating unit 18, while the shoulder position adjusting switch 68 and the intensity adjusting switch 69 direct the movements which can be directed also by the main operating unit 18.

The cylindrical surface of the auxiliary operating unit 19 opposite to the plane portion 62 is recessed at the portion thereof with which the first finger (the index finger) spontaneously comes into contact when the unit 19 is gripped with the thumb placed on the rest 80, whereby a first finger rest 70 is provided. Provided below the first finger rest 70 is a separator 71 for preventing the first finger bearing on the rest 70 from coming into contact with the second finger. This permits the electrodermal resistance measuring means 74 to be described below to give an accurate value when measuring the electrical resistance. Provided below the separator 71 is a second finger rest 72 at at least the portion with which the second finger (the middle finger) comes into contact.

One of the first finger rest 70 and the second finger rest 72 is provided with pulse measuring means 73 serving as physiological data measuring means 81 shown in FIG. 12 for measuring the pulse rate of the person to be treated. The two rests 70 and 72 are provided with the electrodermal resistance measuring means 74 for measuring the electrical resistance of the skin to check the amount of perspiration. This measuring means 74 comprises an electrode 75 provided in the first finger rest 70 and an electrode 76 provided in the second finger rest 72 for measuring the electrical resistance therebetween. The term "physiological data" as used herein refers to physiological quantities which vary with the degree of stiffness or the state of relaxation when the person to be treated is massaged. These quantities include the temperature of the skin, electroencepharograph, respiratory rate, blood pressure, etc. in addition to the pulse rate. Means for measuring these items of data may be used.

The control means 63 and one of the electrodes, 76, are connected to a remote control circuit 77, and the pulse measuring means 73 and the other electrode 75 are connected via a sensor processing circuit 78 to the remote control circuit 77. The remote control circuit 77 is electrically connected to the control circuit 20 of the chair 8 by the wiring line 22.

Next, the operation of the massage machine 1 of the above construction will be described below first with respect to the manual course.

In the case where the manual switch 35 on the main operating unit 18 is pushed, the switches other than those directing the automatic courses are made ready for manipulation. When the shoulder position adjusting switch 45 or 68 of the main operating unit 18 or auxiliary operating unit 19 is manipulated, the site to be treated can be determined by manually moving the massage device 11 to a location desired by the person to be treated. The massage desired by the person can be performed by manipulating the switch desired by the person and included among the switches provided on the main operating unit 18 and adapted to direct the respective massage movements, i.e., among the acupressure switch 38, tapping switch 39, kneading switch 40 and tapping-kneading switch 41. At this time, the intensity and speed of massage and the distance between the therapeutic members 13, 13 are adjustable by manipulating the respective switches, i.e., the intensity adjusting switch 42 or 69 provided on the main operating unit 18 or the auxiliary operating unit 19, and the speed adjusting switch 43 and the width adjusting switch 44 provided only on the main operating unit 18.

At this time, the liquid crystal display 16 indicates the current massage movement, the site of massaging, the intensity and speed of massage, the distance between the therapeutic members 13, 13, etc., thus enabling the person to be treated to recognize what massage is given to what site of his or her body.

The automatic course will be described next.

When the person to be treated selects the desired switch from among those on the main operating unit 18 for directing the respective automatic courses, the massage device 11 is started to move from upper end to lower end for detecting the body form, with the therapeutic members 13 held out of operation, and the body form indicator 55 on the liquid crystal display 26 is lighted up. During this movement, the pressure of the body is detected from the load acting on the therapeutic members 13 and is indicated stepwise by the pressure indicator 56. The shoulder position providing a reference is determined from the result of body pressure detected, and the massage device 11 in upward or downward movement is brought to a halt at the reference position, whereupon detection of the body form is completed, and the form indicator 55 goes off.

The shoulder position is adjustable by the shoulder position adjusting switch 45 or 68 on the main operating unit 18 or auxiliary operating unit 19 within a predetermined period of time after the completion of body form detection. The person can then be massaged at the position desired by the person even if the shoulder position is detected as shifted.

Upon lapse of the predetermined period of time after the completion of form detection, an operation is conducted for the automatic course corresponding to the selected switch.

During the operation for the automatic course, the auxiliary operating unit 19 is held by hand with the thumb placed on the rest 80. The auxiliary operating unit 19 can be held with good stability at this time because the unit is gripped with the thumb placed on the flat rest 80. Further because the thumb rest 80 projecting from the plane portion 62 has the same height as the switches of operating means 63 thereon, the thumb can be placed readily in position without the likelihood of pushing other switches in error. The rest 80 has a plurality of ridges on the surface thereof to prevent the thumb from slipping thereon.

When the auxiliary operating unit 19 is gripped by one hand with the first finger bearing on the rest 70 and the second finger in contact with the rest 72, the pulse rate is measured by the pulse measuring means 73. Further with the first finger in contact with the electrode 75 of the first finger rest 70 and the second finger in contact with the electrode 76 of the second finger rest 72, the electrical resistance between the two electrodes 75, 76 is measured. The measured pulse rate and electrical resistance are fed to the control circuit 20 via the remote control circuit 77.

The control circuit 20 judges the degree of stiffness and the state of relaxation with reference to the measured physiological data (pulse rate and electrical resistance). Based on the result, the degree of stiffness is indicated stepwise by the indicator 54, and the site of a degree of stiffness greater than is predetermined is indicated by the representation of therapeutic site 46 (more particularly 46a). This enables the user to recognize the degree of stiffness or particular site of stiffness.

Based on the physiological data, the control circuit 20 controls the inclining motor 9, lift motor 10, therapeutic motor 12 and turning motor 15. When the person to be treated is massaged according to the degree of stiffness, for example, by giving a massage of great intensity to the part of high degree of stiffness and a massage of low intensity to the part of low degree of stiffness, the stiff part can be concentrically massaged effectively for the relief of stiffness to ensure relaxation without the likelihood of the person feeling unsatisfactory or pain.

During the operation, the auxiliary operating unit 19 is held by hand, and various switches 65, 66, 67, 68, 69 provided on the unit 19 as held by hand can be manipulated.

In the case where the repeat switch 65 is pushed, a repeat movement is directed, whereby the specified part can be concentrically massaged to relieve the desired part of stiffness.

When the turn switch 66 is manipulated, the footrest 14 can be adjusted to the position desired by the user, and the inclining switch 67 adjusts the angle of the backrest 6 when manipulated, consequently permitting the user to be seated as adjusted to a relaxed state.

When the intensity adjusting switch 69 is manipulated, the intensity of massage can be adjusted to a level desired by the user.

With the massage machine 1 of the construction described above, the auxiliary operating unit 19 is not held by the user in the same posture but is freely movable relative to the chair 8, as gripped by one hand, and can therefore be held by the user in a relaxed state. Furthermore, the auxiliary operating unit 19 is not adapted to direct every movement of the massage machine 1 but is adapted to direct specified movements. This serves to make the unit compact and lightweight, permitting the user to be massaged in a relaxed state without becoming tired even when holding the unit for a prolonged period of time.

The specified movements are those which are frequently performed during massaging, such that most of movements or operations can be directed only by the auxiliary operating unit 19 without using the main operating unit 18. This renders the machine more convenient to use.

Since the person to be treated can be massaged in a relaxed state even if holding the auxiliary operating unit 19 by hand for a prolonged period of time, the physiological data described above can be measured in real time while executing a massage program. Accordingly, the massage program can be modified by feeding back the result of measurement to ensure a massage of high therapeutic effect.

According to the foregoing embodiment, the specified movements which can be directed by the auxiliary operating unit 19 are auxiliary movements which can not be directed by the main operating unit 18 and movements which can be directed also by the main operating unit 18, while the specified movements may be the auxiliary movements only, or only the movements which can be directed also by the main operating unit.

According to the invention, the auxiliary operating unit is made movable relative to the chair and thereby holdable by the user in a relaxed state. Further because the auxiliary operating unit is adapted to direct specified movements or auxiliary movements included among a plurality of movements, the unit can be compacted and lightweight, is unlikely to cause fatigue to the person holding the unit for a long period of time, enables the user to be massaged in a relaxed state, permits the user to manipulate the unit immediately when so required, and therefore ensures improved convenience for use.

Since the auxiliary operating unit is adapted to direct the specified movements or auxiliary movements which are movements frequently used, most of the movements can be directed by the auxiliary operating unit without using the main operating unit. This ensures improved convenience in using the massage machine.

The auxiliary operating unit is in the form of a hollow cylinder having a cut plane portion. The unit can therefore be gripped with good stability, with the thumb placed not on the cylindrical surface portion but on the plane portion.

The cut plane portion has control means for directing the specified or auxiliary movement. This enables the user to direct the specified or auxiliary movements by moving the thumb.

The auxiliary operating unit is provided with means for detecting the physiological data produced by massaging the person to be treated. The physiological data can therefore be detected at all times by the auxiliary operating unit held by hand over a long period of time, and an optimum massage can be given based on the result.

## Claims

1. A massage machine having a massage device incorporated in a chair for massaging the person to be treated, the massage machine being **characterized in that** the machine comprises a main operating unit and an auxiliary operating unit, each to be manipulated by the person, the main operating unit and the auxiliary operating unit being adapted for directing at least one of movements of the massage device and other elements, the auxiliary operating unit being movable relative to the chair.

2. The massage machine according to claim 1 wherein the auxiliary operating unit directs at least one of the movements to be directed by the main operating unit.

3. The massage machine according to claim 1 wherein the auxiliary operating unit directs the movement to be not directed by the main operating unit.

4. The massage machine according to any one of claims 1 to 3 wherein the movement directed by the auxiliary operating unit is a movement which is used frequently during massaging.

5. The massage machine according to any one of claims 1 to 4 which further comprises a reclining mechanism for inclining or raising a backrest of the chair and wherein the angle of inclination of the backrest is made controllable as directed by the auxiliary operating unit.

6. The massage machine according to any one of claims 1 to 5 wherein the chair has a backrest provided with the massage device upwardly or downwardly movably, and the massage device is movable upward or downward as directed by the auxiliary operating unit.

7. The massage machine according to any one of claims 1 to 6 wherein the chair is pivotally movably provided with a footrest at a forward end of a seat thereof, and the angle of pivotal movement of the footrest is controllable as directed by the auxiliary operating unit.

8. The massage machine according to any one of claims 1 to 7 wherein the auxiliary operating unit controlling the massaging intensity of the massage device.

9. The massage machine according to any one of claims 1 to 8 wherein the auxiliary operating unit is in the form of a hollow cylinder having a cut plane portion.

10. The massage machine according to claim 9 wherein the auxiliary operating unit is provided at the cut plane portion with control means.

11. The massage machine according to claims 9 or 10 wherein the cut plane portion has a rest for placing the thumb thereon.

12. The massage machine according to any one of claims 1 to 11 wherein the auxiliary operating unit is provided with means for detecting physiological data produced by massaging the person to be treated.
